# EUROPÄISCHE PATENTSCHRIFT

(11) **EP 1 803 688 B1**
(45) Veröffentlichungstag und Bekanntmachung des Hinweises auf die Patenterteilung: **27.07.2011**
(21) Anmeldenummer: 06025490.1
(22) Anmeldetag: 08.12.2006
(51) Int. Cl.: C02F 3/12, B01D 61/18, B01D 65/08

(54) **Membranbioreaktor und Verfahren für die biologische Reinigung von ölbelastetem Abwasser**
Membrane bioreactor and method for the biological treatment of oily wastewater
Bioréacteur à membrane et procédé de traitement biologique des eaux usées huileuses

(30) Priorität: 09.12.2005 DE 102005059334; 11.01.2006 DE 102006001603
(43) Veröffentlichungstag der Anmeldung: 04.07.2007
(73) Patentinhaber: Firma aquadetox international GmbH, 88317 Altmannshofen (DE)
(72) Erfinder: Schaible, Jürgen, 88299 Leutkirch (DE); Lorch, Roland, 88348 Bad Saulgau (DE)
(74) Vertreter: Pfister, Stefan Helmut Ulrich

(56) Entgegenhaltungen:
- EP-A- 1 101 738
- EP-A- 1 375 435
- EP-A1- 1 270 514
- WO-A1-03/057351
- JP-A- 2001 334 282
- PHAN THANH TRI: "Oily wastewater treatment by membrane bioreactor process with biological activated carbon process" August 2002 (2002-08), ASIAN INSTITUTE OF TECHNOLOGY, SCHOOL OF ENVIRONMENT, RESOURCES AND DEVELOPMENT , THAILAND , XP002434220 * Absatz [03.5] * * Abbildung 2.3 * * Abbildung 3.3 *
- BLOCHER C ET AL: "Continuous regeneration of degreasing solutions from electroplating operations using a membrane bioreactor" DESALINATION, ELSEVIER, AMSTERDAM, NL, Bd. 162, 10. März 2004 (2004-03-10), Seiten 315-326, XP004519460 ISSN: 0011-9164

## Beschreibung

Die Erfindung betrifft eine biologische Kläranlage für die biologische Reinigung von ölbelastetem Abwasser, bestehend aus wenigstens einem Zulauf für das ölbelastete Abwasser, wenigstens einem Behälter für die Belebungsstufe, in welchem Mikroorganismen einen Abbau des Öles im ölbelasteten Abwasser bewirken, und einem Ablauf. Die Erfindung betrifft auch ein Verfahren zur biologischen Reinigung von insbesondere ölbelastetem Abwasser, bei dem das Abwasser eine Vorklärstufe und anschließend eine Belebungsstufe durchläuft. In dem erfindungsgemäßen Verfahren wird dabei in der Belebungsstufe das ölbelastete Abwasser durch Mikroorganismen abgebaut.

Biologische Kläranlagen für die biologische Reinigung von ölbelastetem Abwasser sind bekannt. Dabei ist insbesondere ein Verfahren zur biologischen Reinigung von ölbelastetem Abwasser in einem Behälter nach dem Verfahren des fluidisierten Festbettes bekannt, wobei mit dem Abwasser in den Behälter eingetragene Öle entfernt werden können. Dabei setzt sich das fluidisierte Festbett aus einer Vielzahl von offenzelligen Trägerteilchen zusammen, die mineralölbeständig und mit offenen Makroporen ausgebildet sind. Es erfolgt auch eine bodennahe, flächige Belüftung, die eine aufwärts gerichtete Strömung als Belüftungssäule bewirkt, wobei die Säule derart ausgebildet ist, dass die offenzelligen Trägerteilchen bevorzugt in der Mitte durch die Sauerstoff- beziehungsweise Luftbläschen nach oben aufgetrieben werden und an der Behälterwand wieder in den bodennahen Bereich absinken können, sodass eine stetige Umwälzung der Trägerteilchen gegeben ist.

Aus dem Stand der Technik ist auch eine Vorrichtung zur Durchführung des oben beschriebenen Verfahrens bekannt. Der Behälter zur biologischen Abwasserbehandlung ist dabei als Schlammfang ausgebildet und besitzt eine bodenseitige Saugöffnung sowie eine flächige, bodennahe Belüftung.

Bei allen aus dem Stand der Technik bekannten Kläranlagen ist es notwendig, dass das mit Öl (z. B. Motoröl oder Mineralöl) verschmutzte Abwasser im Wesentlichen in drei Behandlungsschritten, Vorklärung, Belebung und Nachklärung, behandelt werden muß. Dabei weisen alle bisher bekannten biologischen Kläranlagen eine Vorklärungsstufe, eine Belebungsstufe und eine Nachklärungsstufe auf. Der anlagentechnische Aufwand und der Platzaufwand hierfür ist erheblich.

Die Veröffentlichung "Oily wastewater treatment by membrane bioreactor process with biological activated carbon process" von Phan Thanh Tri, August 2002, Asian Institute of Technology, School of Environment, Resources and Development, Thailand, offenbart ein Verfahren zur biologischen Reinigung von ölbelastetem Abwasser. In der Belebungsstufe ist hier jedoch eine Membranfilteranordnung vorgesehen, die Mikroorganismen zurückhält. Die Verwendung von offenzelligen Trägerteilchen als fluidisiertes Festbett wird hierin nicht gezeigt.

Die Veröffentlichung Blocher C et al:"Continuous regeneration of degreasing solutions from electroplating operations using a membrane bioreactor", Desalination, Elsevier, Amsterdam, NL Bd162, 10. März 2004, Seiten 315-326 offenbart eine Kläranlage für die biologische Reinigung von ölbelastetem Abwasser. Die Verwendung von einem aus offenzelligen Trägerteilchen fluidisierten Festbett wird hierin nicht beschrieben.

Die EP 1 375 435 betrifft eine biologische Kläranlage mit einer Filteranordnung und einer Belüftung. Auch durch diese Druckschrift wird ein fluidisiertes Festbett aus offenzelligen Trägerteilchen nicht gezeigt.

Die EP 1 101 738 betrifft ebenfalls eine biologische Kläranlage. Diese weist jedoch eine Filteranordnung auf, die Vorteile eines fluidisierten Festbettes aus offenzelligen Trägerteilchen zeigt diese biologische Kläranlage jedoch nicht.

Die EP 1 270 514 zeigt zwar die Belüftung des zu behandelnden Abwassers, anstelle eines aus offenzelligen Trägerteilchen gebildeten fluidisierten Festbettes ist hier jedoch ein Filter vorgesehen.

Die JP 2001334282 offenbart eine biologische Kläranlage, in der ein fluidisiertes Festbett vorgesehen ist. Die biologische Kläranlage umfasst desweiteren eine Belüftung. Diese weist jedoch keine spezielle Anordnung oder Ausformung auf.

Ausgehend von dem zuvor beschriebenen Stand der Technik ist es Aufgabe der Erfindung, eine biologische Kläranlage zur Verfügung zu stellen, die platzsparend ist und eine gesteigerte Reinigungseffizienz aufweist.

Die Aufgabe der Erfindung wird gelöst durch eine biologische Kläranlage für die biologische Reinigung von ölbelastetem Abwasser, bestehend aus wenigstens einem Zulauf für das ölbelastete Abwasser, wenigstens einem Behälter für die Belebungsstufe und einem Ablauf nach Anspruch 1. Dabei zeichnet sich die Kläranlage dadurch aus , dass vor dem Ablauf wenigstens eine Filteranordnung in dem Behälter der Belebungsstufe vorgesehen ist. Damit ist es erfindungsgemäß jetzt gegeben, dass die biologische Kläranlage ohne eine der Belebungsstufe nachgeordnete Klärstufe auskommt. Die Klärung erfolgt jetzt in dem in der Belebungsstufe angeordneten Filter- beziehungsweise der Filteranordnung. Damit wird natürlich der anlagentechnische Aufwand für eine derartige Kläranlage erheblich gesenkt. Die erfindungsgemäße biologische Kläranlage ist auch äußerst platzsparend, da es jetzt durch die Einsparung der nachgeordneten Klärstufe lediglich nur noch zwei Stufen mit den entsprechenden Behältern gibt.

Eine derartige biologische Kläranlage baut auf dem im Stand der Technik beschriebenen Verfahren auf und arbeitet nach dem bekannten Verfahren zur biologischen Reinigung von ölbelastetem Abwasser, bei dem in einem Behälter nach dem Verfahren des fluidisierten Festbettes mit dem Abwassern in den Behälter eingetragene Öle entfernt werden. Das fluidisierte Festbett besteht dabei aus einer Vielzahl offenzelliger Trägerteilchen, die Mineralölbeständig und mit offenen Makroporen ausgebildet sind. In der Belebungsstufe befindet sich auch eine aus dem Stand der Technik bekannte Belüftung, wodurch eine Belüftungssäule in dem Behälter der Belebungsstufe entsteht.

Erfindungsgemäß ergänzt wird jetzt diese Anlage beziehungsweise das Verfahren dadurch, dass die Filteranordnung direkt in dem Behälter der Belebungsstufe angeordnet ist . Die Filteranordnung weist dabei einen wesentlich geringeren Platzbedarf auf. Bei der Anordnung in dem Behälter der Belebungsstufe ist selbstverständlich die Platzersparnis am größten. Insbesondere im Vergleich zu herkömmlichen, biologischen Kläranlagen mit einer Nachklärstufe wird eine deutliche Reduzierung des Platzbedarfes für die gesamte biologische Kläranlage benötigt.

Das Verfahren arbeitet dabei wesentlich effizienter, weil es jetzt gelingt, aufgrund der Filteranordnung, einen Austrag der Mikroorganismen aus der Belebungsstufe zu verhindern. Diese Mikroorganismen werden in der Filteranordnung angesammelt und können dadurch in dem Kreislauf der Belebungsstufe verbleiben. Es wird damit eine höhere Effizienz der Belebungseinheit insgesamt erhalten. Die Reinigung der Filter erfolgt normalerweise während des Betriebes, zum Beispiel durch eine in einer späteren Ausführungsform beschriebenen, pulsierenden Beaufschlagung des Filters; oder aber durch ein wechselseitiges kurzzeitiges Wechseln der Saugrichtung kann ebenfalls der Filter beziehungsweise die Filteranordnung gereinigt werden.

Da durch die Erfindung ein Austrag oder ein Verlust der das Öl abbauende Mikroorganismen zuverlässig vermieden wird, steigt die Effizienz, also die erreichbare Abwasserreinigungskapazität pro Volumen derart an, dass auf dem ansonst bekannten Einsatz eines fluidisierten Festbettes in einer erfindungsgemäßen Variante verzichtet werden kann, ohne dabei erheblich an Wirksamkeit beziehungsweise Effizienz der Erfindung zu verlieren. Durch einen erfindungsgemäßen Vorschlag wird daher bei kleineren konstruktiven beziehungsweise anlagetechnischen Aufwand eine höhere Effizienz erreicht, wodurch auch der Aufwand bei dem Betrieb der Kläranlage, insbesondere der Einsatz der Trägerteilchen reduziert oder ausgesetzt werden kann, um trotzdem ein befriedigendes Ergebnis zu erreichen.

Die Erfindung umfasst daher eine Lösung, bei welcher die von den Mikroorganismen beziehungsweise Bakterien besiedelten Trägerteilchen, die das fluidisierte Festbett bilden, eingesetzt werden.

Ein Vorteil der Verwendung des Trägerteilchens liegt insbesondere darin, dass dadurch die Standzeit der Filteranordnung erhöht werden kann. Es ist klar, dass die von den Mikroorganismen erzeugte Biomasse (der "Schlamm") von der Filteranordnung zurückgehalten wird. Obwohl entsprechende Reinigungsmechanismen und Verfahrensschritte für die Filteranordnung vorgesehen sind, ist nicht auszuschließen, dass die sehr feinporigen Filteranordnungen mit der Zeit verstopft werden und dann eine aufwendigere Reinigung notwendig ist. Durch die zur Verfügung Stellung von entsprechendem Trägermaterial in Form der Trägerteilchen wird entsprechend auch Biomasse beziehungsweise Mikroorganismen an den Trägermaterialien gebunden. Die so gebundene Biomasse steht natürlich für eine Verstopfung der Filtermodule nicht mehr zur Verfügung, wodurch die Standzeit der Filtermodule, also die Zeitdauer, bei welchem diese Filteranordnungen entsprechend zuverlässig funktionieren, vergrößert wird. Auch bewirken die an der Filteranordnung (aufgrund der Umwälzbewegung) entlang streichenden Trägerteilchen einen reinigenden Effekt des Filters.

Der Einsatz der Trägerteilchen bietet aber noch einen weiteren, effizienzsteigenden Vorteil. Es ist beobachtet worden, dass sich der auf den Trägermaterialien bildende Biofilm hervorragende Abbauresultate für schwer abbaubare Stoffe im Abwasser erreicht. Die Trägermaterialien bilden gewissermaßen kleine Inseln, in dem sich verschiedene Mikroorganismen ansiedeln und auch halten können, die im Zusammenwirken auch schwer abbaubare Stoffe entsprechend erfolgreich zersetzen und abbauen können. Durch den Einsatz der Trägerteilchen erreicht die Erfindung also nicht nur eine Effizienzsteigerung, also eine höhere Leistung, sondern weitert auch das Spektrum der Einsatzmöglichkeiten der Erfindung aus, die Erfindung kann damit auch für verschiedenste Abwasseraufgaben mit hoher Effizienz eingesetzt werden, da durch den Einsatz der Trägermaterialien der Schwerpunkt der Abbauleistung variierbar ist.

Entsprechend einer vorteilhaften Weiterbildung ist es vorgesehen, dass als Filteranordnung eine Bio-Membrananordnung vorgesehen ist. Derartige Filteranordnungen als Membran- beziehungsweise Biomembrananordnungen sind äußerst effizient und platzsparend. Eine Vielzahl derartiger Filter ist bekannt. Für die Erfindung ist es nicht ausschlaggebend, welche Ausführungsvariante eines solchen Filters verwendet werden kann. Beispielsweise sind hier Micro-Clear-Filter bekannt, die aus einer Vielzahl von nebeneinander angeordneten Membranfiltern bestehen. Es ist auch möglich, einen sogenannten Membranfilter als Röhre oder im Wickelmodul oder ein im Querschnitt rechteckiges sogenanntes Membrankissen zu verwenden. Die Erfindung ist hier nicht auf eine einzige Ausführungsform eines solchen Filters eingeschränkt. Vielmehr sind alle derzeit bekannten Filteranordnungen geeignet, erfindungsgemäß eingesetzt werden zu können.

Des Weiteren ist vorgesehen, dass als Filteranordnung ein Cross-Flow-Filter vorgesehen ist. Bei einem Cross-Flow-Filter wird das Filtrat in der Regel rechtwinklig zur Flußrichtung des Klärwassers abgezogen.

Cross-Flow-Filter werden dabei bevorzugt mit Überdruck betrieben, das bedeutet, das Klärwasser wird in die als Cross-Flow-Filter ausgebildete Filteranordnung hineingepumpt. Das aufkonzentrierte Klärwasserkonzentrat wird dabei dann wieder in den Behälter zurückgeleitet, wodurch eine separate Spülstufe für eine so ausgebildete Filteranordnung entfallen kann.

Eine biologische Kläranlage nach der Erfindung, zeichnet sich dadurch aus, dass in der Filteranordnung Mikrofilter vorgesehen sind, die in der Lage sind, in der Belebungsstufe vorhandene Mikroorganismen und/oder Bakterien zurückzuhalten beziehungsweise zurückzuführen. Als eine spezielle Ausführungsform einer solchen Filteranordnung als Mikrofilter sind die bereits erwähnten Micro-Clear-Filter bekannt. Diese sind besonders geeignet, die in der Belebungsstufe vorhandenen Mikororganismen und/oder Bakterien zurückzuhalten beziehungsweise wie oben beschrieben zurückzuführen.

Eine Weiterbildung der Erfindung zeichnet sich auch dadurch aus, dass in der Filteranordnung ein Unterdruck zwischen 0,01 bis 1,0 bar vorgesehen ist. Insbesondere ist dabei ein Unterdruck in einem Bereich von 0,1 bis 0,3 bar zum Ansaugen des gereinigten Abwassers aus der Belebungsstufe bevorzugt.

In einer bevorzugten Variante der Erfindung ist vorgesehen, dass die Filteranordnung im Behälter in eine Tiefe von 0,5 bis 2,0 m, bevorzugt 1,0 bis 1,5 m, unter der Abwasseroberfläche angeordnet ist. Die sich dadurch an der Filteranordnung ergebende Druckdifferenz von ca. 0,05 bis 0,2 bar ist ausreichend für einen effektiven Betrieb der Filteranordnung, bei einer solchen Variante ist der Einsatz einer separaten Pumpe zum Erzeugen eines Unterdruckes beziehungsweise zum Absaugen des Abwassers durch die Filteranordnung nicht notwendig.

Alternativ hierzu ist vorgesehen, dass in der Filteranordnung ein Überdruck vorgesehen ist. Ob in der Filteranordnung ein Unterdruck oder ein Überdruck herrscht wird letztendlich dadurch bestimmt, wo eine entsprechende Pumpe in Flußrichtung vorgesehen ist. Wird die Pumpe in Flußrichtung vor der Filteranordnung angeordnet, saugt diese aus dem Behälter das Klärwasser ab und pumpt dieses mit entsprechend Überdruck in die Filteranordnung. Beide Varianten gehören zur Erfindung. Vorteilhafterweise wird bei einer erfindungsgemäßen Variante vorgesehen, dass von dem Behälter, insbesondere in dessen Bodenbereich, das Klärwasser durch eine Pumpe abgesaugt wird und das Klärwasser durch die Pumpe in die Filteranordnung gepumpt wird. So wird in einfacher Weise in der Filteranordnung ein Überdruck aufgebaut und gleichzeitig effizient der Behälter entleert.

Erfindungsgemäß wird vorgesehen, dass die Filteranordnung auch einen Rücklauf für das Klärwasserkonzentrat aufweist, welche in den Behälter mündet. Eine solche Anordnung ist zum Beispiel bei der Verwendung eines Cross-Flow-Filters günstig, da dieser mit Überdruck entsprechend betrieben wird und insbesondere über den Rücklauf an der Filtermembran sich ansammelnde Rückstände hinausgeschwemmt werden.

Es hat sich als günstig erwiesen, dass das Klärwasser von unten nach oben durch die Filteranordnung gepumpt beziehungsweise gefördert wird. Die Filteranordnung ist dabei erfindungsgemäß innerhalb (zum Beispiel in einem entsprechend abgedichteten Bereich) des Behälters angeordnet. Die Anordnung ist platzsparend, da unterhalb der Filteranordnung die Pumpe vorgesehen ist, die wiederum bevorzugt aus dem Bodenbereich des Behälters das Klärwasser absaugt. Wird an der Filteranordnung ein Rücklauf vorgesehen, so wird der Rücklauf in dem Behälter und dabei bevorzugt im oberen Bereich münden, wodurch der Rücklauf in jedem Fall, unabhängig vom Füllstand des Behälters, widerstandsfrei ablaufen kann. Neben der zwangsweisen Förderung des zu klärenden Abwassers, dem Klärwasser, ist natürlich auch eine natürliche Bewegung des Abwassers verwendbar. Eine entsprechende Strömung wird zum Beispiel durch den Einsatz von aufsteigenden Luft- oder Gasperlen erreicht, die einen entsprechenden Umwälzeffekt in dem Behälter bewirken. Wie noch beschrieben wird, wird natürlich die hier eingeblasene Luft auch gleichzeitig als Belüftung, das heißt als Sauerstoff für die Mikroorganismen verwendet. Durch eine solche Vorgehensweise wird das Klärwasser von unten nach oben durch die Filteranordnung gefördert.

Entsprechend der Erfindung ist es vorgesehen, dass in dem Behälter der Belebungsstufe eine Belüftung angeordnet ist, die insbesondere am oder über dem Boden der Belebungsstufe angeordnet ist und die insbesondere feinporige Luft- und/oder Sauerstoffbläschen in die Belebungsstufe einleitet. Diese Belüftung ist für biologische Kläranlagen äußerst wichtig. Sie führt zum einen zur notwendigen Sauerstoffzufuhr, um die Mikroorganismen und/oder Bakterien damit zu versorgen. Sie führt aber gleichzeitig auch zu einer gewissen Umwälzung des in dem Behälter sich befindenden Abwassers. Damit können sich dann die Bakterien und Mikroorganismen auch entsprechend in dem Behälter bewegen.

Weiterhin ist es nach der Erfindung vorgesehen, wenn in der Belebungsstufe ein fluidisiertes Festbett vorgesehen ist, dass aus einer Vielzahl von offenzelligen Trägerteilchen zusammengesetzt ist. Diese Trägerteilchen sind mineralölbeständig und mit offenen Makroporen ausgebildet. Üblicherweise werden dabei je Kubikmeter Nutzvolumen des Behälters zwischen 50-500 1 Trägerteilchen eingebracht, wobei ein einziges Trägerteilchen ein Volumen zwischen 5-500 cm³ hat und das spezifische Gewicht am mit Mikroorganismen besiedelten Teilchen annähernd dem spezifischen Gewicht des Abwassers entspricht. Bevorzugt wird dabei angestrebt, das pro m³ Volumen des Behälters zwischen 50 und 800 m² an Aufwuchsmaterial an den Trägerteilchen zur Verfügung steht. Die Vielzahl feinperliger Luftblasen, die durch die bodennahe, flächige Belüftung, wie zuvor beschrieben, verursacht wird, führt zu einer aufwärts gerichteten Strömung als Belüftungssäule, wodurch die Trägerteilchen zum Wasserspiegel aufgetrieben werden. Diese Belüftungssäule bildet sich jedoch so, dass die Trägerteilchen an der Behälterwand wieder in den bodennahen Bereich absinken und dann erneut in die Belüftungssäule gelangen, sodass eine stetige Umwälzung der Trägerteilchen, der Mikroorganismen und/oder Bakterien erreicht wird. Dadurch wird insgesamt eine optimale Klärung sichergestellt. Insbesondere wird damit sichergestellt, dass die Ölverschmutzungen aus dem Wasser entfernt werden.

Für die Ausgestaltung der Belüftung sind mehrere Varianten möglich. Zunächst ist vorgesehen, dass die Belüftung als Kreuz beziehungsweise kreuzartig oder speichenförmig ausgebildet ist.

Des Weiteren ist vorgesehen, dass die Belüftung als Plattenbelüfter flächig ausgeführt ist, wobei der Plattenbelüfter eine Vielzahl von Luftaustrittsöffnungen aufweist. Des Weiteren ist es auch möglich, dass der Belüfter kammartig, also E oder doppel-E-artig ausgebildet ist, wobei zum Beispiel bei einem zentralen Versorgungsrohr beidseitig seitlich Belüftungsarme vorgesehen sind. Die Belüftungsarme, wie auch das zentrale Versorgungsrohr sind dabei bevorzugterweise mit Luftaustrittsöffnungen ausgestattet, durch die die Luft beziehungsweise der Sauerstoff auszutreten vermag. Günstigerweise werden dabei die Luftaustrittsöffnungen inhomogen angeordnet. Das bedeutet, es werden Bereiche vorgesehen, wo eine große Dichte von Luftaustrittsöffnungen vorgesehen sind, die an einen Bereich anschließen, die eine geringere Dichte aufweisen. Durch eine solche Verteilung wird einerseits entsprechendes Umwälzverhalten innerhalb des Behälters induziert und zum anderen trotzdem überall entsprechend Luft beziehungsweise Sauerstoff eingebracht.

Insbesondere wird durch eine solche Ausgestaltung erreicht, dass sich im Behälter Bereiche ausbilden, in welchen die Trägerteilchen durch die aufsteigenden Luft- und Sauerstoffbläschen aufsteigen, welche sich entsprechende Bereiche anschließen, wo diese Trägerteilchen nach unten absinken. Insbesondere wird durch die Belüftung eine Umwälzung erreicht.

Die Belüftung der biologischen Kläranlage ist nach der Erfindung als Kreuz beziehungsweise kreuzartig oder strahlenförmig von einem Mittelpunkt nach außen laufend ausgebildet, derart, dass bei der Belüftung eine Strangverteilung von Luftblasen und Trägerteilchen, wie bereits beschrieben, entsteht. Man kann sich die Belüftung im Behälter auch so vorstellen, wie die Speichen eines Rades vom Fahrrad oder dergleichen. Gewissermaßen sternförmig vom Zentrum aus gehen die Röhren am Boden des Behälters entlang. Dadurch, dass entsprechend dimensionierte Öffnungen sich in den Röhren befinden, werden feinporige Luft- und/oder Sauerstoffbläschen in die Belebungsstufe dann eingeleitet.

Eine Weiterbildung der Erfindung sieht vor, dass der Filteranordnung ein Ventil, insbesondere ein gesteuertes Regelventil nachgeordnet ist. Damit läßt sich der Abfluß des gereinigten Abwassers aus dem Belebungsbehälter über die Filteranordnung steuern.

Eine vorteilhafte Weiterbildung der Erfindung zeichnet sich dadurch aus, dass zumindest eine Pumpe vorgesehen ist, die den Unterdruck für die Filteranordnung erzeugt und die insbesondere die Filteranordnung wechselseitig mit Druck zu beaufschlagen vermag. Die wechselseitige Beaufschlagung ist beispielsweise für Reinigungszwecke gut geeignet. Indem kurzzeitig die Flußrichtung des Abwassers aus dem Behälter der Belebungsstufe in die andere Richtung umgekehrt wird, werden die Filter der Filteranordnung gereinigt. Bevorzugt ist es auch, wenn die Pumpe derart ausgebildet ist, dass sie pulsierende Strömungen verursachen kann. Damit lassen sich die Reinigungsergebnisse weiter optimieren. Die notwendigen Reinigungszyklen werden dadurch in erheblichem Maße verringert.

Die Erfindung schlägt in einer Weiterbildung auch vor, dass als Pumpe eine Seitenkanalpumpe vorgesehen ist.

Selbstverständlich ist es nach der Erfindung auch vorgesehen, dass mehrere Filteranordnungen in einer Belebungsstufe vorgesehen sind. Nach der Erfindung ist es möglich, diese Filteranordnungen in Reihe nacheinander zu schalten beziehungsweise miteinander zu verbinden oder aber auch eine Parallelschaltung dieser Filteranordnungen vorzusehen. Beide Anordnungsmöglichkeiten sind von der Erfindung umfaßt und führen zu einer Erhöhung der Klär- beziehungsweise Filterleistung.

Die biologische Kläranlage zeichnet sich entsprechend einer weiteren Variante der Erfindung dadurch aus, dass ein Auffangkanal oder ein Auffangbecken beziehungsweise ein Auffangbehälter vorgesehen ist, in den das gereinigte Wasser einleit- und aus dem das gereinigte Abwasser ausleitbar ist.

Dies erfolgt entsprechend einer vorteilhaften Weiterbildung der Erfindung dadurch, dass ein Leitungssystem vorgesehen ist, dass zumindest die Filteranordnung mit dem Auslaufkanal verbindet, sodass das gereinigte Abwasser dann in den Auffangkanal geleitet werden kann.

In einer bevorzugten Variante der Erfindung ist vorgesehen, dass der Behälter beziehungsweise die Kläranlage auf dem Boden aufgestellt ist oder in das Erdreich beziehungsweise Boden eingelassen ist. Die Erfindung ist insgesamt sehr variabel verwendbar. Grundsätzlich ist es möglich, dass der Behälter zum Beispiel auf einem Hallenboden, zum Beispiel in einer Waschstraße oder dergleichen, aufgestellt wird. Es ist aber auch möglich, den Behälter oder sogar die ganze Kläranlage in den Boden einzulassen, sobald ein entsprechendes Fundament oder Bodenplatte vorgesehen ist oder aber die Kläranlage wird komplett, gegebenfalls auch gekapselt, also verschlossen ins Erdreich eingelassen. Die Erfindung sieht dabei vor, dass entweder der Behälter und/oder die Filteranordnung entsprechend auf oder im Boden vorgesehen ist. Die Erfindung ist auch nicht im Hinblick auf den Grad beschränkt, wie weit der Behälter beziehungsweise die Kläranlage im Boden beziehungsweise Erdreich eingelassen ist. Es ist möglich, die Kläranlage beziehungsweise den Behälter ganz oder auch nur teilweise im Erdreich beziehungsweise Boden einzulassen.

Nach der Erfindung ist vorgesehen, dass der Behälter im unteren Bereich trichterartig beziehungsweise als Trichter ausgebildet ist. Durch die bevorzugt mittig oder zentral aufsteigenden Luftperlen ergibt sich eine hyperbelförmige Strömungscharakteristik, derart, dass mittig das Abwasser (gegebenenfalls mit den Trägerteilchen sowie mit den übrigen darin schwebenden Bestandteilen wie Öl und Mikroorganismen) aufsteigt, an der Oberfläche radial nach außen versetzt wird und dort nach unten gezogen wird, um an dem Kreislauf entsprechend teilzunehmen. Wird nun der untere Bereich des Behälters trichterartig ausgebildet, so unterstützt diese Gestaltung die sich hier ausbildende Strömungscharakteristik und vermeidet, dass nicht umgewälzte oder gespülte Behälterbereiche entstehen, an denen sich Biomasse, also abgestorbene Mikroorganismen usw., als Schlamm absetzen. Zwar wird durch die Anordnung des Trichters verfügbares Behältervolumen aufgegeben, jedoch steigt die Wartungsfreundlichkeit durch die Ausgestaltung nach der Erfindung erheblich, da eine ungewollte Verschlammung entsprechend vermieden wird. Anlagentechnisch kann auf der Außenseite der Bereich, der durch die Trichtergestaltung geschaffen wird, durch die Anordnung entsprechender Pumpen oder Steuerungseinheiten usw. platzsparend genutzt werden.

Erfindungsgemäβ wird die Filteranordnung im unteren Bereich im Trichter angeordnet. Es wurde bereits erwähnt, dass es günstig ist, wenn die Filteranorndung von unten nach oben mit zu klärendem Abwasser, dem Klärwasser, angespült wird. Bei einer trichterförmigen Ausgestaltung, die letztendlich zu einem rotationssymmetrischen Behälter führt, ergibt sich bei zentrischem Einleiten der Luft beziehungsweise des Gases oder Sauerstoffes ein entsprechende Aufwärtsbewegung des Wassers in der Mitte, wodurch geschickterweise die Filteranordnung gerade in diesem Bereich im Trichter angeordnet ist und durch die Anorndung im Trichter auch eine ausreichende Abwassersäule über der Filteranordnung besteht, um ohne den Einsatz zusätzlicher Pumpen, ein ausreichender Differenzdruck an der Filteranordnung beziehungsweise Membran anliegt, um das Abziehen des geklärten Wassers durch die Filteranorndung zu erreichen. Durch die vorteilhafte Anordnung der Filteranordnung im Behälter in einer Tiefe von 0,5 bis 2,0 m, bevorzugt, 1,0 bis 1,5 m, unter der Abwasseroberfläche wurde in diesem Zusammenhang bereits hingewiesen. Es ist hierzu zu bemerken, dass natürlich bei einem Einsatz entsprechender Drosseln oder Pumpen natürlich auch andere Tiefen realisierbar sind, die Erfindung also auf den angegebenen Bereich nicht beschränkt ist.

In einer weiteren bevorzugten Variante der Erfindung wird vorgeschlagen, dass der Belebungsstufe eine Vorklärstufe vorgeschaltet ist.

Die Vorklärung dient zum Beispiel als Schlammfang beziehungsweise als Grob- und Feinstoffabscheidung.

Des Weiteren wird in einer erfindungsgemäßen Variante vorgesehen, dass eine Filterbelüftung, welche insbesondere unterhalb der Filteranordnung vorgesehen ist, im Einsatz ist.

Durch diese erfindungsgemäße Variante wird ein zusätzlicher Effekt erreicht. Die Belüftung dient nicht nur dazu, den für den Abbau des Klärwassers notwendigen Sauerstoff für die Mikroorganismen heranzutransportieren, er wird auch zusätzlich dafür genützt, um die Filterelemente beziehungsweise die Membran der Filteranordnungen usw. zu reinigen. Die aufsteigenden Luftperlen bewirken eine Abwärtsströmung des Wassers an der Membranfläche und dadurch eine laufende Reinigung.

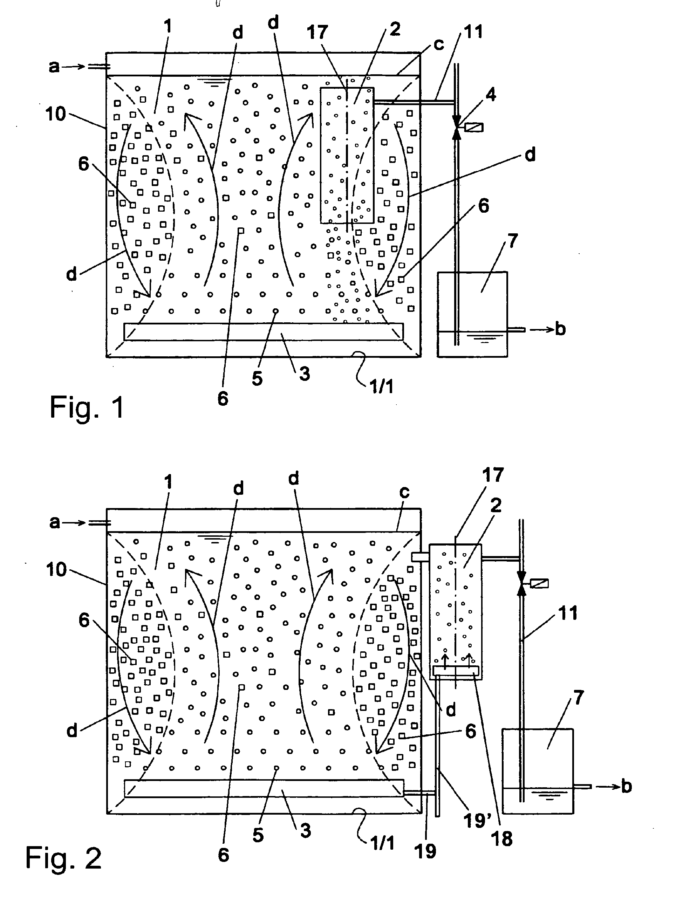

Zunächst ist vorgesehen, dass die Filterbelüftung Teil der Belüftung ist. Das bedeutet, dass ein gewisser Bereich der Belüftung auch der Filterbelüftung dient, wie zum Beispiel in Fig. 1 angedeutet ist. Dabei werden in dem Bereich, wo über der Belüftung die Filteranordnung vorgesehen ist, Maßnahmen getroffen, damit hier eine größere Anzahl von Luftperlen aufsteigt, um somit den Reinigungseffekt noch weiter zu verbessern.

Geschickterweise wird vorgesehen, dass eine gemeinsame Luftversorgung der Filterbelüftung und der Belüftung eingesetzt wird, wodurch mit dieser so gestalteten Belüftung ein zusätzlicher überraschender Vorteil erreicht wird.

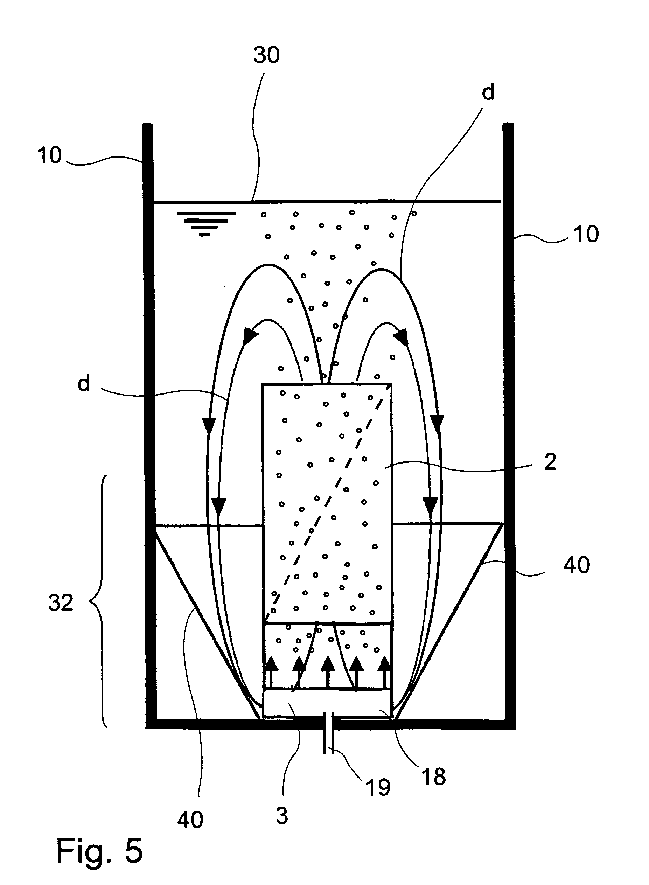

Die Erfindung sicht vor, daß die Filterbelüftung auch gleichzeitig als Belüftung dient. Zum einen wird dadurch der konstruktive Aufwand für die Belüftung beziehungsweise Filterbelüftung stark reduziert, da nur ein Aggregat vorgesehen ist, um die Luft in den Behälter einzubringen. Dabei wird geschickterweise eingebrachte Luft zweifach ausgenutzt. Nämlich zunächst wird die Filteranordnung von unten durch die Filterbelüftung/Belüftung angeströmt, wodurch die Filterbelüftung eine entsprechende Reinigung der Filteranordnung erreicht. Die an den Membranen beziehungsweise Filterplatten oder Filterelementen der Filteranordnung hochstreifenden Luftperlen lösen dabei sich ansetzende Biomasse (Schlamm) ab und reißen diesen nach oben mit. Wie bereits beschrieben ist dieser Reinigungsprozess unter Umständen nicht vollständig ausreichend, da die Mikroöffnungen der Membran trotzdem zugesetzt werden können, weswegen doch in gewissen Abständen Wartungsarbeiten notwendig sind, aber durch diesen Spülprozess werden diese den Betrieb der erfindungsgemäßen Kläranlage unterbrechenden Arbeiten nur selten notwendig. Darüber hinaus führt die Belüftung während, zuvor oder nach dem Reinigen der Filteranordnung auch zu einer entsprechenden Sauerstoffzufuhr für die im Abwasser lebenden Mikroorganismen. Die Belebungsstufe erfährt dadurch den notwendigen Sauerstoffeintrag. Darüber hinaus wird durch dieses Konzept eine Umwälzbewegung des Abwassers in Gang gesetzt, die natürlich dazu führt, dass eine möglichst homogene Verteilung der Mikroorganismen im Abwasser und eine laufende Durchmischung des neu eingetragenen Wassers erfolgt, um Konzentrationsspitzen im Abwasser zu vermeiden ist zum Beispiel in Fig. 5 gezeigt.

In einer weiteren erfindungsgemäßen Variante ist vorgesehen, dass der Behälter einen Überlauf aufweist und der Überlauf mit einer Überlaufleitung mit dem Schlammfang beziehungsweise der Vorklärstufe verbunden ist. Es können selbstverständlich Schwankungen des Pegels im Behälter auftreten und es müssen Vorkehrungen getroffen werden, dass vermieden wird, dass das Abwasser über den Behälterrand herausfließt. Bekanntermaßen wird hierfür eine Überlauf eingesetzt und das hieraus austretende Abwasser wieder in den Schlammfang beziehungsweise die Vorklärstufe gegeben, um eine Klärung entsprechend sicherzustellen.

In einer erfindungsgemäßen Variante wird eine Flüssigkeitssteuerung für den Abwasserstand im Behälter vorgesehen durch welchen die Flüssigkeitssteuerung gesteuert Abwasser über den Überlaufbehälter ableitbar ist. Das Abfallprodukt der Mikroorangismen ist Biomasse oder Schlamm, der natürlich aus dem Behälter zu entfernen ist. Erfindungsgemäße ist der Abfluss aus der Belebungsstufe in eine ansonsten bekannte Nachklärstufe nicht möglich. Durch die Flüssigkeitssteuerung ist es nun möglich, den Abwasserstand im Behälter so zu steuern und von Zeit zu Zeit Abwasser mit Biomasse (Schlamm) über den Überlauf in den Schlammfang beziehungsweise die Vorklärstufe abzuziehen. Der Überlauf erfährt somit einen zweiten Einsatzbereich. Er sichert nicht nur die Anordnung vor ungewollten Überfluten oder Überschwemmen, sondern wird auch anlagentechnisch zum Abziehen des Schlamms beziehungsweise abgestorbenen Biomaterialien eingesetzt. Hierzu besitzt die Flüssigkeitssteuerung einen Flüssigkeitsstandsensor, zum Beispiel einen entsprechenden Drucksensor, und wirkt auf eine Pumpe im Zulauf des Abwassers und steigert nach Bedarf, zum Beispiel nach entsprechenden zeitlichen Vorgaben, die Pumpleistung derart, dass der Flüssigkeitsstand im Behälter zu steigen beginnt bis das Abwasser über den Überlauf austreten kann und so die Biomasse entfernt. Gesteuert wird das ganze durch den Flüssigkeitsstandsensor, um ein übermäßiges Ansteigen entsprechend zu vermeiden. Auf einen sonstigen notwendigen separaten Schlammabzug im unteren Bereich des Behälters kann so verzichtet werden, der anlagentechnische Aufwand sinkt entsprechend. Insbesondere wird es möglich, einen automatischen Betrieb der Kläranlage, insbesondere für den Abzug des Schlammes durch den Einsatz der Flüssigkeitssteuerung zu erreichen.

Die Aufgabe der Erfindung wird auch gelöst durch ein Verfahren zur biologischen Reinigung von ölbelastetem Abwasser nach dem Verfahren des fluidisierten Festbettes, bei dem das Abwasser eine Vorklärstufe und anschließend eine Belebungsstufe durchläuft, das sich dadurch auszeichnet, dass das Abwasser aus der Belebungsstufe durch wenigstens eine in oder neben der Belebungsstufe vorgesehene Filteranordung in den Ablauf geleitet wird. Das Verfahren des fluidisierten Festbettes, auf dem die Erfindung aufbaut und auf das ausdrücklich Bezug genommen wird, wurde bereits ausführlich beschrieben, sodass dieses nicht nochmals wiederholt wird. Durch die Anwendung des erfindungsgemäßen Verfahrens ist es ebenfalls möglich, insbesondere ölbelastetes Abwasser in einer Vorklärstufe und einer nachgeschalteten Belebungsstufe zu reinigen, wobei das Abwasser eben aus der Belebungsstufe direkt durch wenigstens eine in dieser Belebungsstufe vorgesehene Filteranordnung in den Ablauf geleitet wird. Dieses Verfahren spart einen ganzen Verfahrensschritt der bisher bekannten Verfahren ein, nämlich den des Nachklärens in einer Klärstufe. Der anlagentechnische Aufwand ist erheblich geringer. Insbesondere der Platzbedarf solcher biologischen Kläranlagen, die das Verfahren durchzuführen vermögen, ist erheblich geringer als der aus dem Stand der Technik bekannte Platzbedarf.

Eine Weiterbildung des zuvor beschriebenen Verfahrens zeichnet sich dadurch aus, dass als Filteranordnung eine Membranfilteranordnung, insbesondere eine Bio-Membrananordnung verwendet wird und die in der Belebungsstufe vorhandenen Mikroorganismen und/oder Bakterien durch diese Membranfilteranordnung zurückgehalten werden beziehungsweise durch den Einsatz einer solchen Anordnung in die Belebungsstufe zurückgeführt werden können. Damit erhöht sich die Effizienz der biologischen Klärung erheblich, weil man nicht ständig neue Bakterien beziehungsweise Mikroorganismen hinzuführen muß. Die Mikroorganismen beziehungsweise Bakterien ernähren sich ja von den in dem Abwasser enthaltenen Verschmutzungen, insbesondere auch den ölhaltigen Verschmutzungen und können sich dadurch gut entfalten und auch vermehren. Bei bekannten Verfahren wurde jedoch ein großer Teil dieser Mikroorganismen in die Nachklärstufe ausgeschwemmt, wodurch die Effizienz in der Belebungsstufe geringer ist, als dies mit dem jetzt neu vorgeschlagenen Verfahren der Fall ist.

Eine Weiterbildung der zuvor beschriebenen Verfahren zeichnet sich dadurch aus, dass das durch Mikroorganismen und/oder Bakterien besiedelbare Trägerteilchen im ölbelasteten Abwasser ein fluidisiertes Festbett in der Belebungsstufe bildet, das das Abwasser reinigt. Dies geschieht in der bereits bei der Kläranlage beschriebenen Weise, in dem sich die mit Mikroorganismen und/oder Bakterien besiedelten Trägerteilchen gewissermaßen in einem Umlauf in dem Behälter der Belebungsstufe befinden und das Abwasser reinigen. Ein weiterer Effekt des Einsatzes der Trägerteilchen ist, dass diese, wenn diese an der Membran entlanggleiten ebenfalls ein Ablösen des an der Filtermembran beziehungsweise Filterplatten anhaftenden Biomaterials bewirken.

Dazu erfolgt auch eine Beaufschlagung des Abwassers mit feinporigen Luft- und/oder Sauerstoffbläschen, insbesondere vom Boden der Belebungsstufe aus.

Ein weiterer Aspekt des erfindungsgemäßen Verfahrens ist dadurch angegeben, dass die Belüftung über eine kreuzförmig, sternförmig oder speichenartig ausgebildete Belüftungsanlage erfolgt und dadurch in der Belebungsstufe eine - im Querschnitt gesehen - hyperbelförmige Säule entsteht, bei der die Verteilungskonzentration der Luftbläschen nach außen hin abnimmt, während die Verteilung der Trägerteilchen am Außenrand des Behälters der Belebungsstufe am größten ist. Am Außenrand sinken dabei die Trägerteilchen bevorzugt ab und im Inneren der Säule steigen sie nach oben.

Eine Variante der zuvor beschriebenen Verfahren zeichnet sich auch dadurch aus, dass durch die Belüftung eine Strangverteilung erzeugt wird, die ein Aufsteigen und Absinken der Trägerteilchen bevorzugt entlang einer Bewegungsrichtung (b) bewirkt. Hierunter ist der Effekt zu verstehen, dass das Aufsteigen im Inneren der Säule geschieht und im äußeren Bereich am Behälterrand das Absinken der Trägerteilchen.

Das erfindungsgemäße Verfahren zeichnet sich auch dadurch aus, dass ein Unterdruck in der Filteranordnung erzeugt wird, durch den das Abwasser in die Filteranordnung gesaugt beziehungsweise durch diese hindurch gesaugt wird. Das Ansaugen erfolgt dabei selbstverständlich innerhalb des Behälters der Belebungsstufe, egal, ob die Filteranordnung in der Belebungsstufe selbst angeordnet ist, oder ob sie sich außerhalb der Belebungsstufe gewissermaßen nebengeordnet befindet. Diese Anordnung hat für die Wirkung der Filteranordnung keine Folgen. Erfindungsgemäß kann selbstverständlich neben der Zuleitung des Abwassers aus der Belebungsstufe in die Filteranordnung eine sogenannte Spülleitung vorgesehen werden, durch die dann bestimmte Reinigungsrückstände nach der Reinigung des Filters wieder in die Belebungsstufe gelangen und dort erneut in den Klärprozeß eingegeben werden.

Die Erfindung sieht entsprechend einer Weiterbildung auch vor, dass die Filteranordnung wechselseitig mit Druck beaufschlagt wird, um eine Rückspülung und/oder Reinigung zu erreichen.

Ein ähnlicher oder fast gleicher Effekt wird dadurch erzielt, dass die Filtration regelmäßig kurz unterbrochen wird. Dies geschieht bevorzugt in pulsartigen Intervallen. Dabei kann man beispielsweise Intervalle von 9 Minuten Filtern und 30 Sekunden Pause oder aber ein Intervall von 4 Minuten Filtern und 15 Sekunden Pause vorsehen. Dies ist allerdings lediglich eine bevorzugte Variante. Alle Filtrationen, die regelmäßig kurz unterbrochen werden, können je nach Filteraufgabe eingesetzt werden, um den erfindungsgemäßen Effekt erreichen zu können. Die Erfindung sieht auch vor, dass zur Reinigung des Filters in diesen in einem vorgegebenen Zeitrhythmus Wasserstoffperoxyd zugegeben wird. Hierbei wählt man bevorzugt eine Konzentration von 1% bis 2% bei einer jeweiligen Einwirkzeit von 30 bis 45 Minuten. Es ist anzumerken, dass die Beaufschlagung mit Wasserstoffperoxyd lediglich der Reinigung des Filters dient und deshalb auch nur bevorzugt innerhalb des Filters durchgeführt wird. Dies ist allerdings nur bei bestimmten Applikationen erforderlich und erfolgt in Intervallen zwischen einmal täglich bis einmal wöchentlich. Diese Reinigung dient insbesondere dazu, um ein Biofaulen auf der Membran zu verhindern.

Günstigerweise wird im erfindungsgemäßen Verfahren des Weiteren vorgeschlagen, dass die Filteranordnung durch eine Filterbelüftung, die gegebenenfalls auch gleichzeitig als Belüftung wirkt, gesäubert wird.

Der verfahrensmäßige Vorteil ergibt sich darin, dass durch den Einsatz der Filterbelüftung die Filteranordnung gesäubert beziehungsweise gereinigt wird, Luft beziehungsweise Sauerstoff in die Belebungsstufe eingebracht wird und eine Umwälzbewegung des Abwassers im Behälter in Gang gesetzt beziehungsweise unterhalten wird.

In diesem Zusammenhang wird insbesondere darauf hingewiesen, dass alle im Bezug auf die Kläranlage beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Vorrichtungsansprüche für die Kläranlage berücksichtigt und beansprucht werden und zählen ebenfalls zur Erfindung und zur Offenbarung.
- Fig. 1, 4: Eine schematische Darstellung mit einer Filteranordnung im Behälter der Belebungsstufe nach dem erfindungsgemäße verfahre
- Fig. 2, 3: je eine der Belebungsstufe neben- geordnete Filteranordnung nach dem erfindungsgemäße verfarhe
- Fig. 5: in einer Ansicht die erfindungsgemäßen Kläranlage.

In der Fig. 1 ist ein Teil einer biologischen Kläranlage gezeigt, mit dem das erfindungsgemäße Verfahren durchgeführt wird. In dem Behälter 10 der Belebungsstufe 1 ist eine Filteranordnung 2 derart angeordnet, dass sie sich unterhalb des Niveaus c des Klärwassers in der Belebungsstufe 1 befindet. In der Belebungsstufe 1 befindet sich die Belüftung 3, die kurz über dem Boden beziehungsweise Bodenbereich 1/1 der Belebungsstufe angeordnet ist. Aus dieser Belüftung 3 treten feinporige Luftbläschen aus und steigen säulenartig nach oben. Die Luftbläschen tragen das Bezugszeichen 5. In einer biologischen Kläranlage nach der Erfindung befinden sich auch offenzellige Trägerteilchen 6, die rechteckig schematisch dargestellt sind. Diese Trägerteilchen sind in der Lage, Bakterien und/oder Mikroorganismen zu tragen beziehungsweise es ist möglich, dass sich diese dort ansiedeln.

Durch die Versorgung mit Sauerstoff und einen ständigen Bewegungsrhythmus in der Belebungsstufe 1 reinigen die Mikroorganismen und/oder Bakterien das insbesondere mit öligen Rückständen verunreinigte Abwasser.

Erfindungsgemäß ist nun in dieser Belebungsstufe 1 beziehungsweise in dem Behälter 10 der Belebungsstufe 1 eine Filteranordnung 2 vorgesehen. Durch die strichpunktierte Linie 17 innerhalb der Filteranordnung 2 wird angedeutet, dass es sich um Membranfilter handelt. Membranfilter zeichnen sich dadurch aus, dass sie offenporig sind und wie eine Membran 17 wirken und sich dabei Verschmutzungen in beziehungsweise an der Oberfläche des Filters ablagern. Durch eine pulsartige Beaufschlagung oder durch eine kurzzeitige umgekehrte Beaufschlagung können die angelagerten Feststoffteilchen wieder entfernt werden, so dass die Filterleistung über lange Zeit optimal bleibt.

Über ein Leitungssystem 11 gelangt das durch die Filteranordnung 2 gereinigte Abwasser in einen Auffangkanal 7. Im Leitungssystem 11 ist dabei ein Regelventil 4 zugeschaltet, mittels dessen sich der in der Filteranordnung 2 vorgesehene Unterdruck regeln läßt. Eine Pumpe, die erfindungsgemäß ebenfalls vorgesehen sein kann, ist in der Darstellung nicht gezeigt. Der Unterdruck läßt sich auch über Druckbehälter erzeugen, die zum Beispiel über die nach oben offene Leitung des Leitungssystems angeschlossen werden können. Die Erfindung ist hier nicht eingeschränkt.

Das insbesondere ölhaltige Abwasser gelangt über den Zulauf a in die Belebungsstufe 1. Das gereinigte Abwasser wird aus dem Auffangkanal 7 über den Ablauf b abgeleitet. Innerhalb der Belebungsstufe 1 ist - im Querschnitt gesehen - eine hyperbelförmige Säule durch eine gestrichelte Linie angedeutet. Im Inneren ist dabei die Verteilungskonzentration der Luftbläschen höher als außen. Insbesondere im oberen Bereich ist eine höhere Konzentration von Luftbläschen 5 zu verzeichnen. Die Trägerteilchen bewegen sich im Wesentlichen in Richtung der mit d bezeichneten Pfeile im Inneren der Säule nach oben und am Rand des Behälters 10 wieder nach unten.

Erfindungsgemäß bilden sich bei entsprechender Ausgestaltung der Belüftung 3 Bereiche aus, in welchen eine Aufwärtsbewegung der Trägerteilchen 6 stattfindet, neben denen sich dann Bereiche anschließen, bei welchen eine Absinkbewegung der Trägerteilchen 6 erfolgt. Es ist klar, dass die Aufwärtsbewegung der Trägerteilchen 6 insbesondere durch die Luftbläschen 5 angestoßen wird.

In Fig. 1 ist auch gezeigt, dass die Luftbläschen 5 in die Filteranordnung 2 eindringen. Auch ist zu bemerken, dass in diesem Bereich eine größere Luftbläschendichte herrscht, als daneben. In dem hier gezeigten Ausführungsbeispiel ist in der Belüftung 3 auch eine Filterbelüftung integriert, die zu einer entsprechenden Belüftung des Filters 2 führt, wodurch die Filtermembranen, beziehungsweise der Filter allgemein, gereinigt wird.

In Fig. 2 ist die zweite Variante der erfindungsgemäßen verfahren gezeigt, bei der sich die Filteranordnung 2 nicht in der Belebungsstufe, sondern nebengeordnet zu dieser befindet. Bevorzugt ist es auch hier, dass sich die Filteranordnung 2 unterhalb des Niveaus c des Abwassers in der Belebungsstufe 1 befindet. Die erfindungsgemäß eingesetzten Membranfilter beziehungsweise Biomembranfilter arbeiten bevorzugt unter Wasser. Alle anderen Bezugszeichen sind bereits bei Fig. 1 vorgestellt worden. Auf eine Wiederholung wird daher verzichtet, da ansonsten vom Reinigungsablauf her die Verfahrensschritte und die durch die Bezugszeichen angegebenen technischen Mittel gleich sind.

Da in dem hier gezeigten Ausführungsbeispiel die Filteranordnung 2 neben der Belebungsstufe 1 angeordnet ist, wird hier eine Reinigung der Filteranordnung 2 durch eine separate, eigenständige Filterbelüftung 18 realisiert. Aus dieser treten ebenfalls Luftbläschen aus und reinigen den Filter beziehungsweise die Filtermembran. Dabei ist zu beachten, dass hier die punktierte Linie in der Filteranordnung 2 die Filtermembran 17 nur schematisch andeutet, nicht aber technisch vollständig und abschließend beschreibt. Die Ausgestaltung hier hängt letztendlich von der konkreten Wahl der Filteranordnung 2 ab. Grundsätzlich ist es aber möglich, dass sowohl die Vor- wie auch die Rückseite der Membran mit einer entsprechenden Luftspülung durch die Filterbelüftung 18 beaufschlagt und gereinigt wird.

Geschickterweise ist vorgesehen, dass eine gemeinsame Luftversorgung für die Belüftung 3 beziehungsweise die Filterbelüftung 18 vorgesehen ist. Hierzu sind gemeinsame Versorgungsmittel, zum Beispiel ein Luftpumpenkompressor und dergleichen, vorgesehen und Leitungen 19,19' zur Luftversorgung verteilen die Luft in die jeweiligen Belüftungen 3 beziehungsweise Filterbelüftung 18.

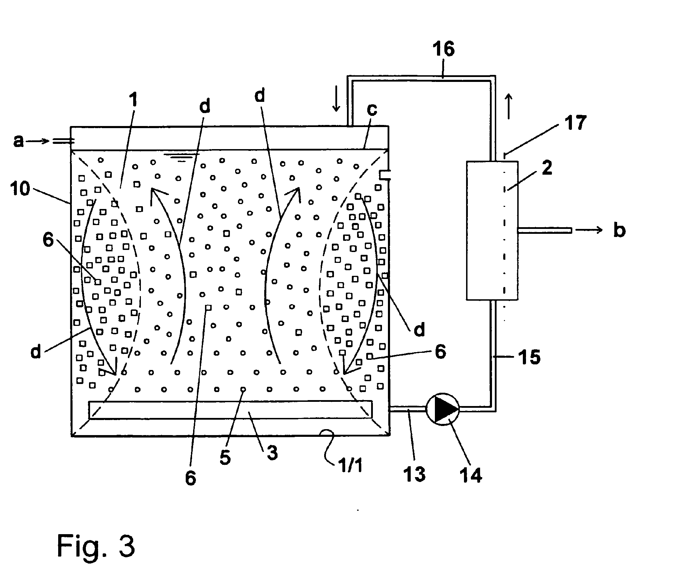

In Fig. 3 ist ein weiteres erfindungsgemäßes verfahren gezeigt. In dem hier gezeigten Ausführungsbeispiel wird das Klärwasser im Bereich des Bodens 1/1 aus dem Behälter 10 über die Ableitung 13 mit Hilfe der Pumpe 14 abgezogen. Über die Förderleitung 15 gelangt das Klärwasser in die Filteranordnung 2, welche hier zum Beispiel als Cross-Flow-Filter ausgeführt und schematisch angedeutet ist. Das gereinigte Filtrat wird am Abfluß b abgenommen, das aufkonzentrierte, noch verschmutzte Klärwasser, läuft über den Rücklauf 16 zurück in den Behälter 1 und wird dort weiter gereingt. Aufgrund des andauernden Überdruckes im Filter 2 und im Anschluß der Filteranordnung 2 über den Rücklauf 16 in den Behälter 1, kann hier auf eine separate Spülstufe verzichtet werden. Eventuell an der Membran 17 haften bleibende Verunreinigungen werden durch den dauernden Strom aufgrund der Pumpe 14 über den Rücklauf 16 ausgeschwemmt und in den Behälter 10 zurückgeleitet. Auch eine solche Ausgestaltung ist sehr platzsparend ausführbar. Grundsätzlich ist es jedoch auch möglich, die Filteranordnung 2 im Bereich des Außenmantels eines Behälters 10 anzuordnen. Dabei befindet sich die Filteranordnung nicht innerhalb des Behälters, also nicht im Klärwasser. Zum Beispiel ist in dem Behälter 10 dann eine entsprechende Innenwandung vorgesehen, welche die Filteranordnung 2 aufnimmt.

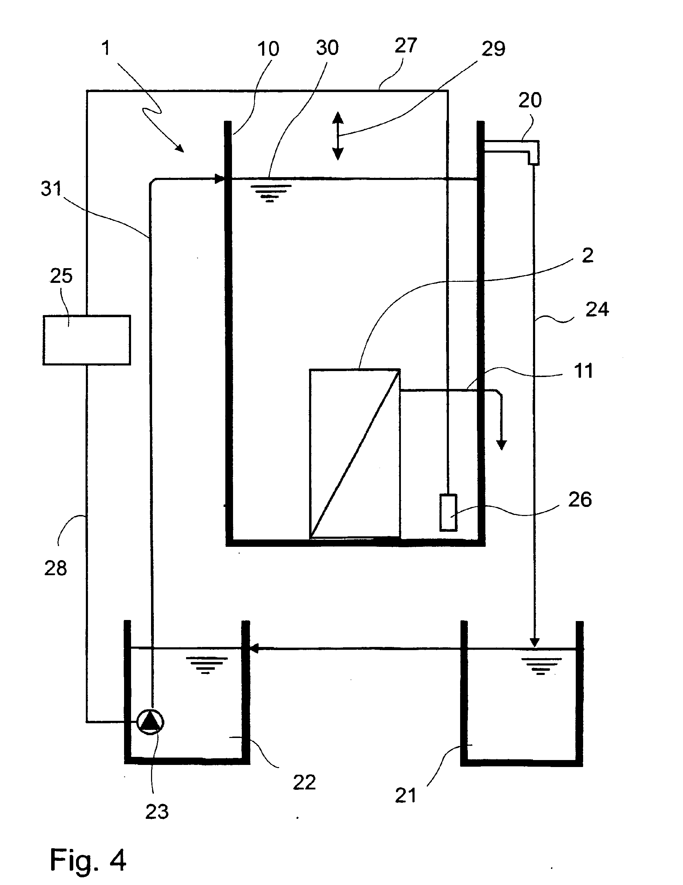

Fig. 4 zeigt in einer erfindungsgemäßen Variante eine weitere Verbesserung der Erfindung. Es ist eine Flüssigkeitssteuerung 25 vorgesehen, durch die der Pegel 30 des Abwassers in dem Behälter 10 gesteuert werden kann. Dies ist durch den Doppelpfeil 29 angedeutet. Hierzu erhält die Flüssigkeitssteuerung 25 über die Sensorleitung 27 Füllstandsinformationen von dem Füllstandssensor 26. Der Einsatz der Flüssigkeitssteuerung 25 liegt insbesondere darin, den Abzug von Schlamm, der durch die Mikroorganismen erzeugt wird, geregelt durchzuführen. Hierzu dient auch der Überlauf 20. In zum Beispiel empirisch ermittelten Zeitintervallen oder nach Bedarf steuert die Flüssigkeitssteuerung 25 den Pegel 30 des Abwassers derart, dass dieser auf und über das Niveau des Überlaufs 20 gelangt, wodurch das Abwasser durch den Überlauf 20 und der Überlaufleitung 24 in den Schlammfang 21 ablaufen kann. Dadurch wird auch entsprechende Biomasse aus der Belebungsstufe 1 heraustransportiert.

Die Füllstandshöhe des Pegels 30 wird dabei über die Flüssigkeitssteuerung 25 und einer Pumpe 23 geregelt, wobei die Pumpe 23 durch die Steuerleitung 28 mit der Flüssigkeitssteuerung 25 verbunden ist. In dem so beschriebenen Mechanismus ist es möglich den Pegel 30 entsprechend anzuheben, um ein Ablaufen des Abwassers über den Überlauf 20 in den Schlammfang 21 zu erreichen, wo sich dann der Schlamm entsprechend absetzen kann und weil er daher problemlos, ohne den Betrieb der erfindungsgemäßen Kläranlage zu unterbrechen, auch entsorgt werden kann. Das vorgeklärte Abwasser gelangt dann zum Beispiel in die Pumpenvorlage 22, aus der heraus dann die Pumpe 23 wie beschrieben das Abwasser über die Abwasserleitung 31 in den Behälter befördert.

Fig. 5 zeigt in einer schematischen Ansicht eine erfindungsgemäße Kläranlage, bei welchem im unteren Bereich 32 des Behälters 10 ein Trichter 40 vorgesehen ist, dessen Zulauf und das Ende nach unten orientiert ist. Genau genommen handelt es sich um ein umgekehrt in dem Behälter 10 eingestellten Kegelstumpf, der Behälter 10 ist natürlich am Boden nach wie vor geschlossen. Die Umwälzbewegung des Abwassers, welche durch die Belüftung 3 bewirkt wird, ist mit den hyperbelartigen Bewegungsbahnen d schmalich angedeutet. Es ergibt sich dabei günstigerweise, dass das Wasser ja unten durch die eingeströmte Luft von den Seitenbereichen her angesaugt wird und eine Verengung durch den Trichter 40 der übrigen Strömungsrichtung folgt und diese unterstützt. Der Trichter 40 vermeidet somit die Ausbildung von Schatten- oder Totbereichen, in dem sich Schlamm ansammeln könnte, der durch die Umwälzbewegung naturgemäß nach außen transportiert würde und im Randbereich, wenn ein Trichter 40 nicht vorhanden wäre, absinken und sich ablagern könnte. Die Anordnung ist vielmehr so gewählt, dass die Filteranordnung 2 bevorzugt zentrisch im Trichter angeordnet ist und so das sowieso aufgrund der Verjüngung des Trichters seitliche angesaugte Abwasser vollständig durch die Filteranordnung 2 hindurchtransportiert wird. Dieser Transporteffekt wird durch die eingesetzte Belüftung 3 erreicht, wobei die Belüftung 3 hier auch gleichzeitig als Filterbelüftung 18 dient, also entsprechend anlagentechnische Vorteile bietet, da nur eine Versorgungsleitung 19 für die Luftversorgung vorzusehen ist und neben einem Säuberungseffekt der Filteranordnung 2 durch die Filterbelüftung 18 / Belüftung 3 auch der notwendige Lufteintrag beziehungsweise Sauerstoffeintrag für die Mikroorganismen erfolgt und auch gleichzeitig eine andauernde Umwälzbewegung des Abwassers in den Behälter 10. Der Schlammaustrag wird dabei wie zuvor beschrieben zum Beispiel nach einer Variante nach Fig. 4 realisiert.

Es wird bemerkt, dass in Fig. 5 auf die wesentlichen Bestandteile Bezug genommen wurde, natürlich Anordnung nach Fig. 5 in dem Konzept nach Fig. 4 oder in den anderen Konzepten nach Fig. 1 bis 3 sinngemäß einsetzbar und realisierbar ist.

Im Übrigen wird darauf hingewiesen, dass die in den Zeichnungen dargestellten Ausgestaltungen erfindungswesentlich sind.

## Patentansprüche

1. Biologische Kläranlage, für die biologische Reinigung von ölbelastetem Abwasser, bestehend aus wenigstens einem Zulauf für das ölbelastete Abwasser, wenigstens einem Behälter für die Belebungsstufe in welchem Mikroorganismen einen Abbau des Öls im ölbelastentem Abwasser bewirken und einem Ablauf, wobei vor dem Ablauf (b) wenigstens eine Filteranordnung (2) in dem Behälter (10) der Belebungsstufe (1) vorgesehen ist, **dadurch gekennzeichnet, dass** in der Belebungsstufe (1) ein fluidisiertes Festbett vorgesehen ist, das aus einer Vielzahl von offenzelligen, Trägerteilchen (6) zusammengesetzt ist, eine Belüftung (3) vorgesehen ist, die als Kreuz beziehungsweise kreuzartig oder speichenförmig, kammartig oder als flächig ausgeführter Plattenbelüfter mit Luftaustrittsöffnungen ausgebildet ist sowie eine Filterbelüftung, wobei eine gemeinsame Luftversorgung (19, 19') der Filterbelüftung (18) und der Belüftung (3) vorgesehen ist, wobei der Behälter (10) im unteren Bereich (32) trichterartig (40) ausgebildet ist, als Filteranordnung (2) eine Bio-Membrananordnung vorgesehen ist, in der Filteranordnung (2) Mikro-Filter vorgesehen sind, die in der Lage sind, in der Belebungsstufe (1) vorhandenen Mikroorganismen, und/oder Bakterien zurückzuhalten bzw. zurückzuführen und die Filteranordnung (2) im unteren Bereich (32) im Trichter (40) des Behälters (10) angeordnet ist.

2. Biologische Kläranlage nach Anspruch 1, **dadurch gekennzeichnet, dass** die Filteranordnung (2) als Cross-Flow-Filter ausgebildet ist und/oder dass in der Filteranordnung (2) ein Unterdruck von 0,01 bis 1,0 bar, insbesondere von 0,1 bis 0,3 bar zum Ansaugen des gereinigten Abwassers aus der Belebungsstufe (1) vorgesehen ist und/oder dass in der Filteranordnung (2) ein Überdruck vorgesehen ist.

3. Biologische Kläranlage nach einem oder beiden der vorhergehenden Ansprüche, **dadurch gekennzeichnet, dass** von dem Behälter (10), insbesondere in dessen Bodenbereich (1/1), das Klärwasser durch eine Pumpe (14) abgesaugt wird und das Klärwasser durch die Pumpe (14) durch die Filteranordnung (2) gepumpt wird und/oder dass von der Filteranordnung (2) ein Rücklauf (16) für das Klärwasserkonzentrat in den Behälter (10) führt und/oder dass das Klärwasser von unten nach oben durch die Filteranordnung (2) gepumpt bzw. gefördert wird und/oder dass als Pumpe eine Seitenkanalpumpe vorgesehen ist.

4. Biologische Kläranlage nach einem oder mehreren der vorhergehenden Ansprüche, **dadurch gekennzeichnet, dass** die Belüftung (3) in der Belebungsstufe (1) am oder über dem Boden (1/1) der Belebungsstufe (1) angeordnet ist und insbesondere feinporige Luft- und/oder Sauerstoffbläschen (5) in die Belebungsstufe (1) einleitet.

5. Biologische Kläranlage nach einem oder mehreren der vor hergehenden Ansprüche, **dadurch gekennzeichnet, dass** an einem Zentralversorgungsrohr der Belüftung (3) seitlich Belüftungsarme vorgesehen sind.

6. Biologische Kläranlage nach einem oder mehreren der vorhergehenden Ansprüche, **dadurch gekennzeichnet, dass** die Filteranordnung (2) ein Ventil (4), insbesondere ein gesteuertes Regelventil nachgeordnet ist.

7. Biologische Kläranlage nach einem oder mehreren der vorhergehenden Ansprüche, **dadurch gekennzeichnet, dass** die Filteranordnung (2), insbesondere zu Reinigungszwecken, wechselseitig mit Druck beaufschlagbar ist und/oder dass zumindest eine Pumpe vorgesehen ist, die den Unterdruck für die Filteranordnung (2) erzeugt und die insbesondere die Filteranordnung (2) wechselseitig mit Druck zu beaufschlagen vermag und/oder dass mehrere Filteranordnungen (2) in der Belebungsstufe (1) vorgesehen sind, die vorzugsweise in Reihe nacheinander geschaltet beziehungsweise miteinander verbunden sind.

8. Biologische Kläranlage nach einem oder mehreren der vorhergehenden Ansprüche, **dadurch gekennzeichnet, dass** ein Auffangkanal (7) bzw. ein Auffangbecken oder ein Auffangbehälter vorgesehen ist, in den das gereinigte Abwasser einleit- und ausleitbar ist und/oder dass ein Leitungssystem (11) vorgesehen ist, das die Filteranordnung (2) zumindest mit dem Auffangkanal (7) verbindet und/oder dass der Behälter (10) beziehungsweise die Kläranlage auf dem Boden aufgestellt ist oder in das Erdreich beziehungsweise Boden eingelassen ist.

9. Biologische Kläranlage nach einem oder mehreren der vorhergehenden Ansprüche, **dadurch gekennzeichnet, dass** der Behälter (10) einen Überlauf (20) aufweist, und der Überlauf (20) durch eine Überlaufleitung (24) mit dem Schlammfang (21) verbunden ist und/oder dass eine Flüssigkeitssteuerung (25) für den Abwasserstand (30) im Behälter (10) vorgesehen ist und durch die Flüssigkeitssteuerung (25) gesteuert Abwasser durch den Überlauf (20) aus dem Behälter (10) ableitbar ist und/oder dass eine Filterbelüftung (18), welche insbesondere unterhalb der Filteranordnung (2) vorgesehen ist.

10. Biologische Kläranlage nach einem oder mehreren der vorhergehenden Ansprüche, **dadurch gekennzeichnet, dass** sich die Filteranordnung (2) im Behälter (10) in einer Tiefe von 0,5 m bis 2 m, bevorzugt 1 bis 1,50 m unter der Abwasseroberfläche befindet und/oder dass der Belebungsstufe (1) eine Vorklärstufe und/oder ein Schlammfang (21) vorgeschaltet ist.

11. Verfahren zur biologischen Reinigung von ölbelastetem Abwasser, bei dem das Abwasser eine Vorklärungsstufe und anschließend eine Belebungsstufe durchläuft, in welcher das im Abwasser mitgeführte Öl von Mikroorganismen abgebaut wird, wobei das Abwasser aus der Belebungsstufe durch wenigstens eine in oder neben der Belebungsstufe vorgesehene Filteranordnung in den Ablauf geleitet wird, **dadurch gekennzeichnet, dass** durch Mikroorganismen und/ oder Bakterien besiedelbare Trägerteilchen im ölbelasteten Abwasser ein fluidisiertes Festbett in der Belebungsstufe bilden, das das Abwasser reinigt und dass das Abwasser durch eine Belüftung mit feinporigen Luft- und/ oder Sauerstoffbläschen, vom Boden der Belebungsstufe aus, beaufschlagt wird, bei der die Verteilungskonzentration der Luftbläschen nach außen abnimmt, während die Verteilung der Trägerteilchen am Außenrand des Behälters der Belebungsstufe am größten ist und die Filteranordnung durch eine gemeinsame Luftversorgung für Belüftung und Filterbelüftung belüftet wird.

12. Verfahren nach Anspruch 12, **dadurch gekennzeichnet, dass** als Filteranordnung eine Membranfilteranordnung, insbesondere eine Bio-Membrananordnung verwendet wird und die in der Belebungsstufe vorhandenen Mikroorganismen und/oder Bakterien zurückhält bzw. in die Belebungsstufe zurückführt.

13. Verfahren nach einem oder mehreren der vorhergehenden Ansprüche 12 und 13, **dadurch gekennzeichnet, dass** sich im Behälter verschiedene Bereiche ausbilden, in welchen das Abwasser durch die aufsteigenden Luft- oder Sauerstoffbläschen aufsteigt oder in welchen die Trägerteilchen nach unten absinken und/oder dass die Belüftung über eine kreuzförmig, speichenartig oder kammartig ausgebildete Belüftungsanlage erfolgt und **dadurch** in der Belebungsstufe eine im Querschnitt gesehene hyperbelförmige Säule entsteht, bei der die Verteilungskonzentration der Luftbläschen nach außen hin abnimmt, während die Verteilung der Trägerteilchen am Außenrand des Behälters der Belebungsstufe am größten ist und/oder dass durch die Belüftung eine Strangverteilung erzeugt wird, die ein Aufsteigen und Absinken der Trägerteilchen, bevorzugt entlang einer Bewegungsrichtung (d), bewirkt.

14. Verfahren nach einem oder mehreren der vorhergehenden Ansprüche 12 bis 14, **dadurch gekennzeichnet, dass** ein Unterdruck in der Filteranordnung erzeugt wird, durch den das Abwasser in die Filteranordnung gesaugt beziehungsweise durch diese hindurchgesaugt wird und/oder dass die Filteranordnung wechselseitig mit Druck beaufschlagt wird, um eine Rückspülung und/oder Reinigung zu erreichen und/oder dass die Filtration regelmäßig kurz unterbrochen wird, bevorzugt in pulsartigen Intervallen und/oder dass zur Reinigung der Filteranordnung in diesen in einem vorgegebenen Zeitrhythmus Wasserstoffperoxid zugegeben wird und/oder dass die Filteranordnung durch eine Filterbelüftung, die gegebenenfalls auch gleichzeitig als Belüftung wirkt, gesäubert wird.

## Claims

1. Biologic sewage plant for biologic cleaning of oil-loaded waste water, comprising at least one feed for the oil-loaded waste water, at least one container for the activation stage in which micro organisms effect a decomposition of the oil in the oil-loaded waste water, and a drain, wherein before the drain (b) at least one filter arrangement (2) is provided in the container (10) of the activation stage (1), **characterized in that** in the activation stage (1) a fluidized packed bed is provided that is composed of a multitude of open-cell carrier particles (6), an aeration (3) is provided, that is configured as cross or cross-like or spoke-shaped, comb-like or as plane aeration panels air exit openings, as well as a filter ventilation, wherein a common air supply (19, 19') of the filter aeration (18) and the aeration (3) is provided, wherein the container (10) is configured in its bottom area (32) funnel-like (40), as filter arrangement (2) a bio membrane arrangement is provided, in the filter arrangement (2) micro filters are provided that are able to hold back or lead back micro organisms and/or bacteria existing in the activation stage (1), and the filter arrangement (2) is arranged in the bottom area (32) in the funnel (40) of the container (10).

2. Biologic sewage plant according to claim 1, **characterized in that** the filter arrangement (2) is configured as cross flow filter, and/or that in the filter arrangement (2) a vacuum of 0.01 to 1.0 bar, in particular of 0.1 to 0.3 bar is provided for sucking in the cleaned waste water out of the activation stage (1), and/or that in the filter arrangement (2) overpressure is provided.

3. Biologic sewage plant according to one or both of the preceding claims, **characterized in that** from the container (10), in particular in its bottom area (1/1), the clarified water is sucked off by a pump (14), and the clarified water is pumped by the pump (14) through the filter arrangement (2), and/or that from the filter arrangement (2) a return (16) for the concentrate of clarified water runs in the container (10), and/or that the clarified water is pumped or conveyed from the bottom to the top through the filter arrangement (2), and/or that as pump a side channel pump is provided.

4. Biologic sewage plant according to one or more of the preceding claims, **characterized in that** the aeration (3) is arranged in the activation stage (1) on or above the floor (1/1) of the activation stage (1), and leads in particular fine pored air and/or oxygen bubbles (5) into the activation stage (1).

5. Biologic sewage plant according to one or more of the preceding claims, **characterized in that** on the side of a central supply pipe of the aeration (3) aeration arms are provided.

6. Biologic sewage plant according to one or more of the preceding claims, **characterized in that** a valve (4), in particular a controlled control valve, is arranged after the filter arrangement (2).

7. Biologic sewage plant according to one or more of the preceding claims, **characterized in that** the filter arrangement (2) can be pressurized mutually, in particular for cleaning, and/or that at least one pump is provided generating the vacuum for the filter arrangement (2) and that is able to pressurize in particular the filter arrangement (2) mutually, and/or that several filter arrangements (2) are provided in the activation stage (1) that are preferably series-connected or connected to each other.

8. Biologic sewage plant according to one or more of the preceding claims, **characterized in that** a collecting channel (7) or a collecting tank or a collecting container is provided into which the cleaned waste water can be lead in or lead out from, and/or a pipe system (11) is provided connecting the filter arrangement (2) at least with the collecting tank (7), and/or the container (10) or the sewage plant is put on the ground or is embedded in the soil or ground.

9. Biologic sewage plant according to one or more of the preceding claims, **characterized in that** the container (10) has an overflow (20), and the overflow (20) is connected with the silt trap (21) via an overflow pipe (24), and/or that a liquid control (25) is provided for the waste water level (30) in the container (10), and by the liquid control (25) waste water can be lead controlled through the overflow (20) out of the container (10), and/or that a filter aeration (18) is provided that is in particular below the filter arrangement (2).

10. Biologic sewage plant according to one or more of the preceding claims, **characterized in that** the filter arrangement (2) is located in the container (10) in a depth of 0.5 to 2 m, preferably 1 to 1.50 m below the surface of the waste water, and/or that a pre-clarifying stage and/or a silt trap (21) are arranged before the activation stage (1).

11. Method for biologic cleaning of oil-loaded waste water in which the waste water runs through a pre-clarifying stage and, after that, through an activation stage, in which the oil transported in the waste water is decomposed by micro organisms, wherein the waste water is lead out of the activation stage through at least one filter arrangement provided in or beside the activation stage into the drain, **characterized in that** carrier particles that can be populated by micro organisms and/or bacteria form in the oil-loaded waste water a fluidized packed bed in the activation stage that cleans the waste water, and that the waste water is impinged by aerating with fine pored air and/or oxygen bubbles from the bottom of the activation stage where the distribution concentration of the air bubbles decreases to the outside while the distribution of the carrier particles at the exterior edge of the container of the activation stage is the largest, and the filter arrangement is aerated by a common air supply for aeration and filter aeration.

12. Method according to claim 11, **characterized in that** as filter arrangement a membrane filter arrangement, in particular a bio membrane arrangement is used, and keeps back the micro organisms and/or bacteria in the activation stage or leads them back into the activation stage.

13. Method according to one or more of the preceding claims 11 and 12, **characterized in that** in the container several area form in which the waste water rises through the rising air or oxygen bubbles, or in which the carrier particles sink downwards, and/or that the aeration is carried out through a cross-like, spoke-shaped or comb-like designed aeration installation, and, by means of this, in the activation stage a column, that is hyperbola-like in cross section, forms in which the distribution concentration of the air bubbles decreases to the outside, while the distribution at the outer edge of the container of the activation stage is the largest, and/or by that the aeration generates a strand distribution that effects rising and sinking of the carrier particles, preferably along a direction (d) of movement.

14. Method according to one or more of the preceding claims 11 to 13, **characterized in that** a vacuum is generated in the filter arrangement through which the waste water is sucked in or through the filter arrangement, and/or that the filter arrangement is pressurized mutually to reach a re-rinsing and/or cleaning, and/or that the filtration is regularly interrupted shortly, preferably in pulse-like intervals, and/or that for cleaning the filter arrangement in a defined time rhythm hydrogen peroxide is put in the filter arrangement, and/or that the filter arrangement is cleaned by a filter aeration that acts, if necessary, also at the same time as aeration.

## Revendications

1. Station d'épuration biologique destinée à l'épuration des eaux usées contenant des huiles et comprenant au moins une arrivée pour les eaux usées contenant des huiles, au moins un récipient pour l'activité biologique dans lequel des micro-organismes effectuent une dégradation des huiles contenues dans les eaux usées, une sortie (b) et en amont de la sortie et à l'intérieur du récipient (10) pour l'activité biologique (1), au moins un système de filtres (2), **caractérisée en ce qu'**il existe un lit fluidisé au niveau de l'étage d'épuration biologique (1) composé de nombreux supports élémentaires sous forme de cellules ouvertes (6), d'une aération (3) en forme de croix ou ayant une forme semblable ou en forme de rayons, de peigne ou d'une ventilation plane comportant des ouvertures pour une sortie d'air et une arrivée d'air filtré avec une arrivée d'air commune (19, 19') au filtre à air (18) et à l'aération (3) et **en ce que** le récipient (10) possède dans sa partie inférieure (32) une forme d'entonnoir (40) au niveau de laquelle est situé le système de filtres (2) constitué par un système de membranes biologiques possédant des filtres microscopiques retenant et confinant les micro-organismes et/ou les bactéries au niveau du récipient destiné à l'activité biologique (1).

2. Station d'épuration biologique selon la revendication 1, **caractérisée en ce que** le système de filtres (2) est un filtre Cross-Flow et/ou **en ce qu'**une dépression comprise entre 0,01 et 1,0 bar et en particulier entre 0,1 et 0,3 bar existe à l'intérieur du système à filtres (2) afin d'aspirer les eaux épurées de l'étage d'épuration biologique et/ou **en ce qu'**une surpression existe à l'intérieur du système de filtres (2).

3. Station dépuration biologique selon l'une des revendications précédentes ou les deux, **caractérisée en ce qu'**une pompe (14) aspire l'eau usée du récipient (10) et en particulier l'aspire par le fond (1/1) de ce récipient et la pompe à travers le système de filtres (2) et/ou **en ce qu'**il existe un retour (16) permettant à l'eau de retourner du système de filtres (2) au récipient (10) et/ou **en ce que** l'eau est pompée ou poussée d'en bas vers le haut à travers le système de filtres (2) et/ou **en ce que** la pompe est une pompe à canal latéral.

4. Station d'épuration biologique selon une ou plusieurs des revendications précédentes, **caractérisée en ce que** l'aération (3) est située au niveau de l'étage d'épuration biologique (1) au niveau du fond ou au-dessus du fond (1/1) et conduit des microbulles (5) d'air et/ou d'oxygène à l'intérieur de l'étage d'épuration biologique.

5. Station d'épuration biologique selon une ou plusieurs des revendications précédentes, **caractérisée en ce que** le tuyau d'alimentation générale de l'aération (3) comporte des bras d'aération latéraux.

6. Station d'épuration biologique selon une ou plusieurs des revendications précédentes, **caractérisée en ce qu'**une vanne (4) et en particulier une vanne de réglage commandée est située en aval du système de filtres (2).

7. Station d'épuration biologique selon une ou plusieurs des revendications précédentes, **caractérisée en ce que** les deux côtés du système de filtres (2) peuvent être mis en alternance en surpression et ceci, en particulier à des fins de nettoyage et/ou **en ce qu'**il existe au moins une pompe créant la dépression pour le système de filtres (2) et permettant en particulier d'appliquer la surpression en alternance sur les deux côtés du système de filtres (2) et/ou **en ce qu'**il existe plusieurs systèmes de filtres (2) à l'intérieur de l'étage d'épuration biologique qui peuvent de préférence être connectés entre eux en série.

8. Station d'épuration biologique selon une ou plusieurs des revendications précédentes, **caractérisée en ce qu'**un canal, un bassin ou un récipient de récupération (7) existe permettant de récupérer et de fournir de l'eau épurée et/ou en qu'il existe un réseau de tuyaux (11) liant le systèmeá de filtres (2) au moins au canal de récupération (7) et/ou **en ce que** le récipient (10) ou la station d'épuration complète est installé(e) sur le sol ou semi-enterré(e) dans la terre.

9. Station d'épuration biologique selon une ou plusieurs des revendications précédentes, **caractérisée en ce que** le récipient (10) possède un trop-plein (20) connecté via un tuyau (24) de trop-plein à un récupérateur de boues (21) et/ou **en ce qu'**un système de contrtle des liquides (25) est prévu pour régler le niveau de l'eau usée (30) à l'intérieur du récipient (10) en vidant l'eau usée du récipient (10) via le tuyau de trop-plein (20) et/ou **en ce qu'**il existe une aération des filtres (18) située en particulier en dessous du système de filtres (2).

10. Station d'épuration biologique selon une ou plusieurs des revendications précédentes, **caractérisée en ce que** le système de filtres (2) est situé à l'intérieur du récipient (10) à un niveau allant de 0,5 à 2m et de préférence allant de 1 à 1,5m sous le niveau de la surface de l'eau usée et/ou **en ce qu'**un étage d'épuration préliminaire est située en amont de l'étage d'épuration biologique (1) et/ou **en ce qu'**un récupérateur de boues (21) est situé en amont.

11. Procédé d'épuration biologique d'eaux usées et contaminées par de l'huile permettant à l'eau usée de traverser d'abord un étage d'épuration préliminaire puis un étage d'épuration biologique dégradant les huiles contaminant l'eau par des micro-organismes en conduisant l'eau sortant de l'étage d'épuration biologique à travers au moins un système de filtres situé à l'intérieur ou à côté du récipient de l'étage d'épuration biologique vers un récupérateur, **caractérisé en ce que** des petits éléments de supports forment un lit fluidisé à l'intérieur de l'étage d'épuration biologique et au milieu de l'eau usée et contaminée par des huiles sur lesquels vivent des micro-organismes et/ou des bactéries qui épurent l'eau usée, traversée par des microbulles d'aire et/ou d'oxygène fabriquées par une aération située au fond de l'étage d'épuration biologique de fagon à ce que la densité des bulles d'air diminue du centre vers le bord tandis que le nombre d'éléments de support augmente du centre vers le bord du récipient de l'étage d'épuration biologique et en utilisant une alimentation commune pour l'aération du récipient et celui du système de filtres.

12. Procédé selon la revendication 11, **caractérisé en ce que** le système de filtre est un ensemble de filtres à membranes et en particulier à membranes biologiques permettant de retenir les micro-organismes et/ou bactéries à l'intérieur de l'étage d'épuration biologique ou de les reconduire.

13. Procédé selon une ou les deux revendications précédentes 11 et 12, **caractérisé en ce que** plusieurs zones se créent à l'intérieur du récipient dans lesquelles l'eau usée monte en raison des bulles d'air ou d'oxygène ascendantes ou des éléments de support descendent et/ou **en ce que** l'aération est effectuée à l'aide d'un système d'aération en forme de croix, de rayons ou de peigne produisant ainsi une colonne dont la section donne une densité en forme d'hyperbole signifiant que la densité de distribution des petites bulles d'air diminue vers l'extérieur tandis que celle des éléments de supports augmente pour être maximale au niveau du bord du récipient et/ou **en ce que** l'aération produit une distribution en forme de multiples colonnes, qui a pour conséquence une montée et une descente des éléments de support de préférence selon une seule direction de mouvement (d).

14. Procédé selon une ou plusieurs des revendications précédentes 11 à 13, **caractérisé en ce qu'**une dépression est produite à l'intérieur du système de filtres permettant d'aspirer l'eau usée à l'intérieur du système de filtres voire à travers le système de filtres et/ou **en ce que** le système de filtres peut être soumis à une pression en alternant les côtés afin d'obtenir un ringage inversé et/ou un nettoyage et/ou **en ce que** la filtrationà est brièvement interrompue à intervalles réguliers et de préférence pará mouvement de pulsation et/ou **en ce que** du peroxyde d'hydrogène est ajouté pendant ces intervalles afin de nettoyer les filtres et/ou **en ce que** le système de filtres est nettoyé à l'aide d'une aération des filtres servant parallèlement comme aération.
